# EUROPEAN PATENT SPECIFICATION

(11) **EP 3 053 769 B1**
(45) Date of publication and mention of the grant of the patent: **15.05.2019**
(21) Application number: 16151894.9
(22) Date of filing: 19.01.2016
(51) Int. Cl.: B60J 10/18, B60J 10/82

(54) **WEATHERSTRIP**
DICHTUNGSLEISTE
JOINT D'ETANCHEITE

(30) Priority: 30.01.2015 JP 2015016972
(43) Date of publication of application: 10.08.2016
(73) Proprietor: Nishikawa Rubber Co., Ltd., Hiroshima-shi, Hiroshima-ken 733-8510 (JP)
(72) Inventor: MATSUURA, Toshifumi, Nishi-ku, Hiroshima-shi, Hiroshima, 733-8510 (JP)
(74) Representative: BRP Renaud & Partner mbB Rechtsanwälte Patentanwälte Steuerberater

(56) References cited:
- EP-A2- 0 310 262
- DE-C1- 19 942 038
- JP-A- 2009 083 742
- US-A1- 2002 058 124

## Description

### BACKGROUND

Generally known automotive weatherstrips are integrated into one-piece ones each including two extruded parts made of an extruded rubber-like elastic material and connected together through an intermediate molded part that has been molded with a die set. Such a weatherstrip is provided on, for example, the periphery of an opening of a door or a roof of an automobile, and its molded part is arranged at a corner of the periphery of the opening. For example, Japanese Unexamined Patent Publication No. 2010-47194 discloses a weatherstrip attached to a front pillar and a header of a convertible. The weatherstrip includes a molded part arranged at the corner defined by the front pillar and the header.

While the molded part is made of a rubber-like elastic material just like the extruded parts, the molded part is often configured to include a metal insert panel embedded therein to increase its rigidity. For example, Japanese Unexamined Patent Publication No. 2009-83742 which appears to be the closest prior art document, describes that a weatherstrip attached to the periphery of a back window of an automobile includes a molded part which is arranged at a corner of the periphery of the back window and in which an insert panel is embedded.

The adhesion between the rubber-like elastic material forming the molded part and the metal insert panel is usually poor. To address this problem, the weatherstrip described in Japanese Unexamined Patent Publication No. 2009-83742 is designed to include a resin layer formed to cover surfaces of the insert panel, thereby bringing the insert panel into close contact with the rubber-like elastic material forming the molded part. In addition, the insert panel is designed to have a plurality of through holes, and portions of the resin layer on both sides of the insert panel are bonded together through the resin material that has entered the through holes.

Both side portions of the molded part residing on both sides of the insert panel are also generally bonded together through the through holes of the insert panel without providing the resin layer as described above. The through holes provide an anchoring effect to strengthen the bonding between the molded part and the insert panel via the through holes.

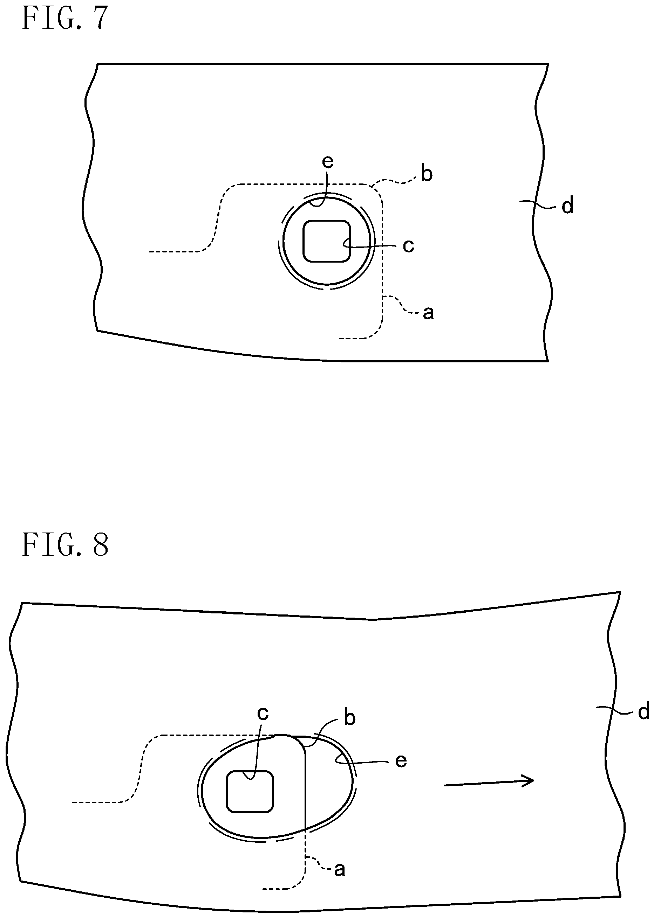

In some cases, a weatherstrip structure in which a portion of an insert panel near a corner thereof is exposed through an opening formed in a surface of a molded part is employed. For example, as illustrated in FIG. 7, a clip attachment hole c for attaching a weatherstrip to an automobile body is formed in the vicinity of a corner b of an insert panel a. As a result, a portion of the insert panel a around the clip attachment hole c is exposed through an opening e of a molded part d.

In this situation, when the molded part d is removed from the die set, for example, by drawing the molded part d while twisting it, the opening e of the molded part d may increase in size and be thus deformed, and a corner portion of the insert panel a may protrude through the opening e, as illustrated in FIG. 8. This problem may also occur due to a tension or any other force applied to the weatherstrip not only when the molded part is removed from the die set, but also when the weatherstrip molded is hanged on a hanger for temporarily placing the weatherstrip, or when a clip is assembled to the weatherstrip.

To address this problem, a through hole may be formed between the corner of the insert panel and the portion of the insert panel around the clip attachment hole to achieve the above-described anchoring effect. However, to form the through hole, the corner portion of the insert panel needs to increase in size, resulting in an increase in cost. In addition, the corner portion may also be unable to increase in size for a reason related to the design of the weatherstrip. A resin layer (adhesive layer) as described in Japanese Unexamined Patent Publication No. 2009-83742 may be provided on the insert panel. However, this also results in an increase in cost. In addition, even if such a resin layer is provided, a great force, if applied to the molded part, may cause the molded part to separate from the resin layer, and the opening may increase in size and be thus deformed.

This problem is common to not only a situation where a clip attachment hole is formed in the vicinity of a corner of the insert panel, but also situations where a portion of the insert panel in the vicinity of the corner thereof is exposed from the molded part to perform some work, such as a situation where a threaded hole is formed.

### SUMMARY

To solve the problem, the present invention as defined by the independent claim 1, provides an engaging part to reduce the displacement of a molded part from an insert panel.

Specifically, a weatherstrip disclosed herein includes: a molded part which is made of a rubber-like elastic material and in which an insert panel is embedded, and is characterized in that the molded part has an opening formed in a surface of the molded part, a part of the insert panel near a corner of the insert panel is exposed through the opening, and a side edge of the insert panel defining the corner has at least one recess opening laterally outward or at least one protrusion protruding laterally outward.

Such a weatherstrip functions to reduce the displacement of a part of the molded part along the side edge defining the corner of the insert panel even if an external force is applied to the molded part, because the recess or the protrusion formed on the side edge is engaged with the molded part. This prevents the opening of the molded part from increasing in size and being thus deformed, thereby helping prevent the corner portion of the insert panel from protruding through the opening.

In addition, even if the opening increases in size and is thus deformed, the recess or the protrusion of the corner portion of the insert panel getting engaged with the molded part prevents the corner portion of the insert panel from being displaced and protruding through the opening of the molded part.

The rubber-like elastic material herein means rubber, such as a rubber made of ethylene-propylene-diene terpolymer (EPDM), or a material that is elastic like rubber, such as a thermoplastic elastomer. The insert panel is preferably made of a rigid material, such as metal or hard resin (polyethylene, polypropylene, polyamide, or any other suitable materials).

In a preferred embodiment, the side edge may extend in a longitudinal direction of the weatherstrip. That is, a long object, such as a weatherstrip, tends to be drawn in its longitudinal direction when handled. Thus, the recess or the protrusion formed on the side edge extending in the longitudinal direction helps prevent the corner portion of the insert panel from protruding through the opening.

In a preferred embodiment, while the insert panel may have a plurality of through holes through which the rubber-like elastic material enters to bond both side portions of the molded part residing on both sides of the insert panel together, there may be no space for providing the through holes between the corner and the exposed part near the corner, and thus the through holes may be formed in a portion of the insert panel except between the corner and the exposed part.

If there is no space for providing the through holes between the corner and the exposed part of the insert panel as described above, the formation of the recess or the protrusion is particularly effective at preventing the corner portion of the insert panel from protruding through the opening.

In a preferred embodiment, the exposed part of the insert panel near the corner may protrude from a peripheral part of the insert panel covered with the molded part toward the surface of the molded part, and a level difference may be formed between the exposed part and the peripheral part.

Thus, the level difference between the exposed part of the insert panel and its peripheral part functions as an obstacle, and reduces the displacement of the molded part. This further helps prevent the corner portion of the insert panel from protruding through, or exiting from, the opening.

In a preferred embodiment, the at least one recess or the at least one protrusion may include a plurality of recesses or protrusions formed along the side edge. This further helps prevent the corner portion of the insert panel from protruding through, or exiting from, the opening.

According to the invention, an attachment hole for fitting a clip to the exposed part may be formed.

### BRIEF DESCRIPTION OF THE DRAWINGS

FIG. 1 is a perspective view illustrating a portion of an automobile according to an embodiment of the present invention.
FIG. 2 is a perspective view, partially in cross-section, illustrating a portion of a weatherstrip according to the embodiment.
FIG. 3 is a perspective view of an insert panel of the weatherstrip.
FIG. 4 is a cross-sectional view taken along the plane A-A in FIG. 2.
FIG. 5 is a cross-sectional view taken along the plane B-B in FIG. 2.
FIG. 6 is a front view which illustrates a corner portion of the insert panel and in which the region encircled in FIG. 2 is viewed in a direction of an arrow W.
FIG. 7 is a front view of the same region illustrated and viewed from the same angle as in FIG. 6, illustrating a state where a portion of an insert panel is exposed through an opening of a molded part in a conventional example. The right and left sides of FIG. 7 are reversed from those of FIG. 6.
FIG. 8 is a front view illustrating a state where the removal of the molded part from a die set has caused the opening to increase in size and be thus deformed in the conventional example.

### DETAILED DESCRIPTION

An embodiment of the present invention will now be described with reference to the drawings. The following preferred embodiment is merely an illustrative one in nature, and is not intended to limit the scope, applications, and use of the invention.

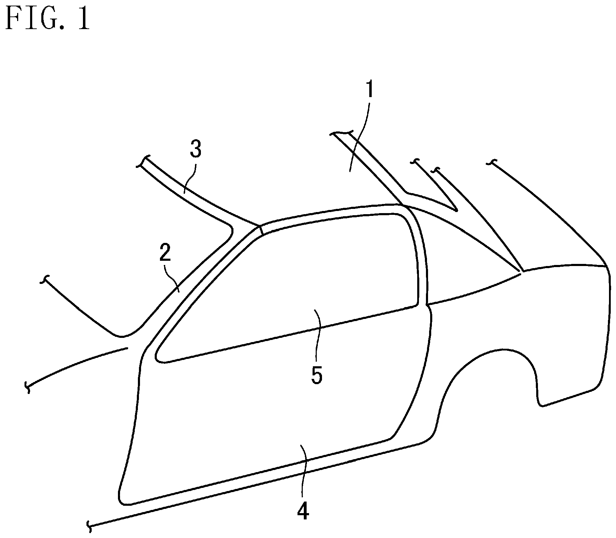

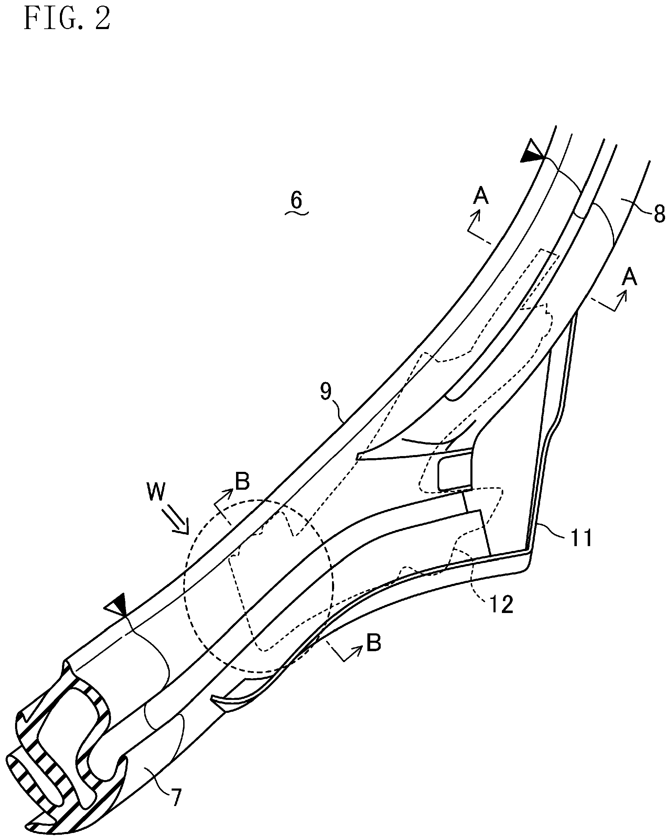

In an automobile (convertible) illustrated in FIG. 1, reference character 1 denotes a roof, reference character 2 denotes a front pillar, reference character 3 denotes a header, reference character 4 denotes a door, and reference character 5 denotes a door glass. A weatherstrip 6 illustrated in FIG. 2 is attached to this automobile along the front pillar 2 and the header 3 of the automobile. This automobile is a retractable roof vehicle configured to be opened by folding an openable/closable roof. FIG. 1 illustrates the appearance of this automobile. The roof 1 is configured as a hood, and the hood folded is designed to be housed in a boot in a back lower portion of an automobile body. Note that the roof, instead of being configured as a hood, may also include a roof panel and a back window panel located backward of the roof panel, and the roof panel folded may also be housed in the boot while being placed over the back window panel. Vehicles of this type are generally referred to as retractable hardtop vehicles, cabriolets, or convertibles. For example, some of such vehicles in each of which only a roof 1 is detachable are referred to as targa top vehicles. The weatherstrip 6 herein includes an extruded part 7 attached to the front pillar 2, an extruded part 8 attached to the header 3, and a molded part 9 connecting the extruded parts 7 and 8 together. The molded part 9 is provided with a connection portion 11 coming into contact with, and being connected to, a front end of a roof-side weatherstrip (unshown) when the roof 1 is closed.

In FIG. 2, a portion extending between solid halves of triangles is the molded part 9, and portions corresponding to hollow halves of the triangles are the extruded parts 7 and 8, respectively.

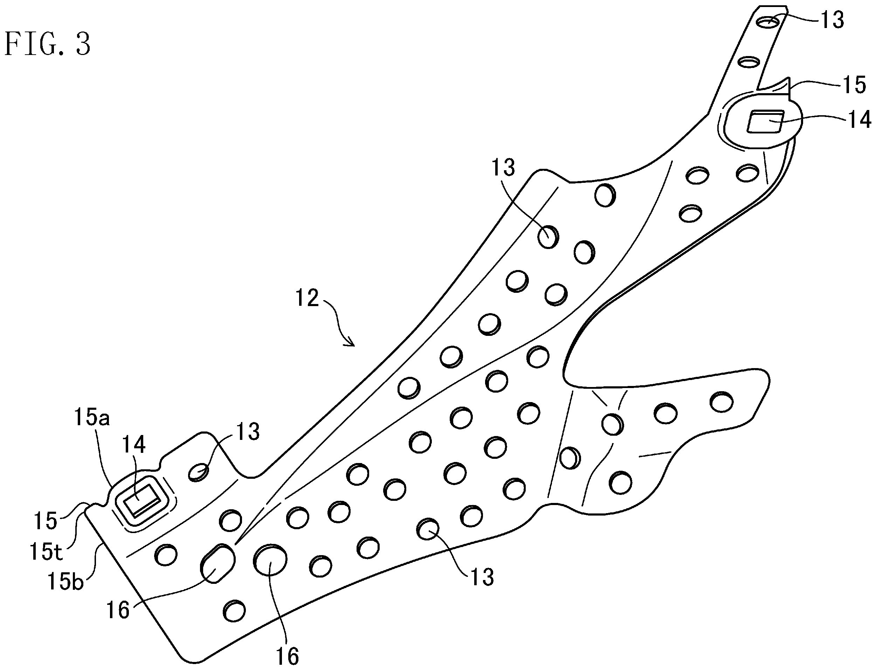

An insert panel 12 is embedded in the molded part 9. As illustrated in FIG. 3, the insert panel 12 has many through holes 13. Both end portions of the insert panel 12 each have a clip attachment hole 14 for fixing the weatherstrip 6 to an associated one of the front pillar 2 and the header 3. Each of the clip attachment holes 14 is formed in the vicinity of a corner 15 of the insert panel 12.

Note that openings 16 are used to fix the insert panel 12 to a die set during molding of the molded part 9 in the die set.

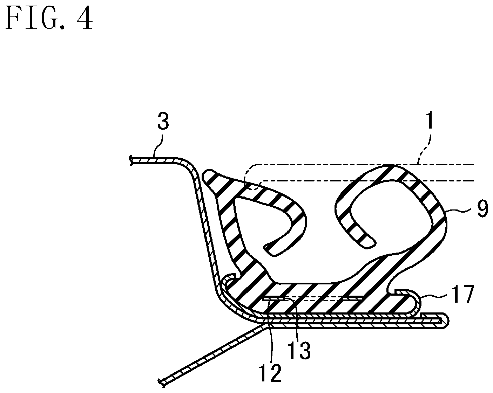

As illustrated in FIG. 4, a rubber-like elastic material forming the molded part 9 is present in the through holes 13. Thus, both side portions of the molded part 9 residing on both sides of the insert panel 12 are bonded together through the through holes 13, thereby preventing the molded part 9 from being displaced with respect to the insert panel 12 (an anchoring effect of the through holes 13). In other words, the insert panel 12 is prevented from being displaced with respect to the molded part 9. A region of the weatherstrip 6 illustrated in FIG. 4 is retained by a retainer 17 fixed to the header 3.

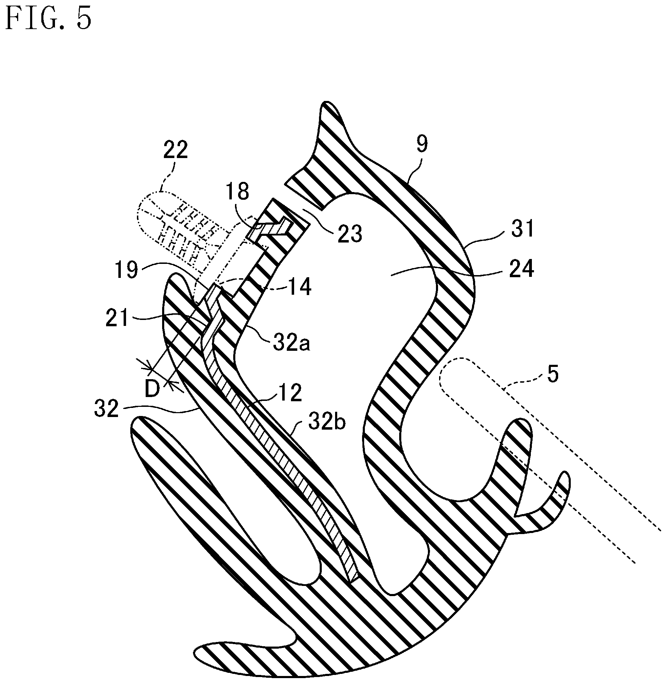

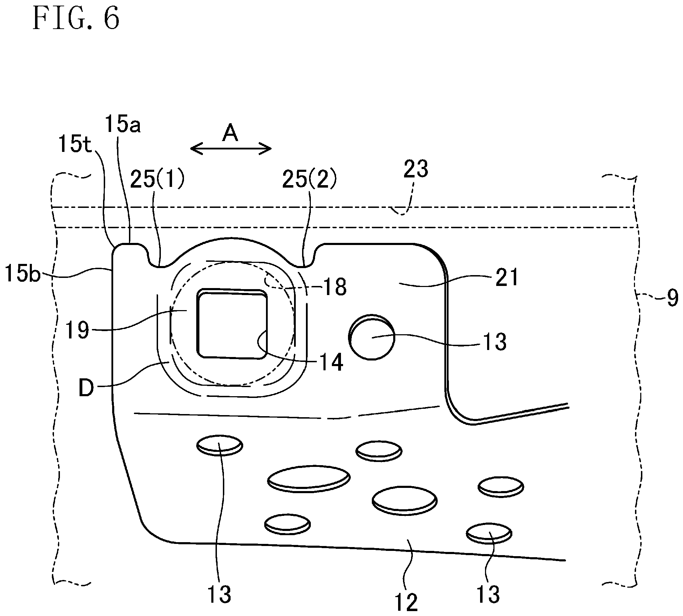

As illustrated in FIG. 5, when viewed in cross section, the molded part 9 includes a seal portion 31 being in contact with, and sealing, the upper edge and indoor side surface of the door glass 5, and a substantially L-shaped assembly portion 32 supporting the seal portion 31, and has a circular hollow portion 24 formed by connecting the seal portion 31 and the assembly portion 32 together via a slit 23 or directly. Furthermore, the assembly portion 32 includes a base subpart 32a having a face parallel to an attachment surface of the front pillar 2, being in contact with the attachment surface, and fixed with a clip 22, and a standing subpart 32b extending downward of the automobile body from the indoor side of the base subpart 32a. The base subpart 32a and the standing subpart 32b connected together have a substantially L-shaped cross section, and the insert panel 12 that is substantially L-shaped in cross section is embedded in this assembly portion 32. The clip attachment hole 14 of the insert panel 12 and its surrounding region both located in the base subpart 32a of the molded part 9 are exposed through an opening 18 formed in a surface of the molded part 9, i.e., a surface of the base subpart 32a facing the attachment surface of the front pillar 2 herein (see FIG. 6). That is, a part of the insert panel 12 is exposed through the opening 18 that is larger than the attachment hole 14. This exposed part 19 protrudes from a peripheral part 21 of the insert panel 12 covered with the molded part 9 toward the surface of the molded part 9, and a level difference D is formed between the exposed part 19 and the peripheral part 21. This level difference D functions as an engaging part making the insert panel 12 engage with the molded part 9 to reduce the displacement of the molded part 9 with respect to the insert panel 12 in a region surrounding the exposed part 19. Note that a core for forming the hollow portion 24 in molding of the molded part 9 is removed through the slit 23 illustrated in FIG. 5.

As illustrated in FIG. 6, a corner portion of the insert panel 12 having the clip attachment hole 14 has two adjacent side edges 15a and 15b defining the corner 15, and among these side edges 15a and 15b, the side edge 15a extending in the weatherstrip longitudinal direction A has two recesses 25. These two recesses 25 are located on both sides of the clip attachment hole 14 in the weatherstrip longitudinal direction A to open laterally outward of the insert panel 12.

Thus, in the corner portion, the rubber-like elastic material forming the molded part 9 enters the recesses 25 of the insert panel 12, and as a result, the molded part 9 and the insert panel 12 are engaged with each other in the weatherstrip longitudinal direction A so as to reduce the displacement of the molded part 9 along the side edge 15a of the insert panel 12.

Here, the peripheral part 21 of the insert panel 12 around the exposed part 19 thereof exposed through the opening 18 of the molded part 9 has through holes 13 exhibiting the above-described anchoring effect. The through holes 13 are closer to the longitudinal center of the insert panel 12 than the exposed part 19, and are closer to the lateral center of the insert panel 12 than the exposed part 19. Meanwhile, there is no space for such through holes 13 between the exposed part 19 and the side edges 15a and 15b of the corner 15. That is, no through hole 13 is provided therebetween.

As can be seen from the foregoing, while no through hole 13 is provided between the exposed part 19 and the corner 15, the side edge 15a has the recesses 25. This prevents the corner portion of the insert panel 12 from protruding through or exiting from the opening 18 of the molded part 9 even if the molded part 9 is drawn or twisted to remove the molded part 9 from the die set or to perform any other suitable process. This is because the molded part 9 and the insert panel 12 are engaged with each other in the weatherstrip longitudinal direction A by the recesses 25. In other words, the recesses 25 prevent the molded part 9 from being displaced along the side edge 15a of the insert panel 12, thereby reducing the deformation of the opening 18 of the molded part 9 resulting from an increase in size thereof.

According to the embodiment illustrated in FIG. 6, the two recesses 25 are located on both sides of the clip attachment hole 14 in the weatherstrip longitudinal direction A. However, as long as a recess 25(1) particularly close to a tip 15t of the corner 15 is provided, the deformation of the opening 18 resulting from an increase in size thereof is reducible even in the absence of a recess 25(2) remote from the tip 15t. In addition, even if the opening 18 increases in size and is thus deformed, and the tip 15t of the corner 15 is visible through the opening 18, the recess 25(1) that is engaged with the rubber-like elastic material or that will get engaged therewith prevents the tip 15t of the corner 15 from passing through, and being located outside, the opening 18. This prevents the corner portion of the insert panel from protruding through, or exiting from, the opening 18 of the molded part 9.

Moreover, the level difference D between the exposed part 19 of the insert panel 12 and the peripheral part 21 thereof as illustrated in FIG. 5 also reduces the displacement of the molded part 9 with respect to the insert panel 12. This prevents more reliably the corner portion from protruding through, or exiting from, the opening 18 of the molded part 9.

The side edge 15a of the corner 15 of the insert panel 12 may have a protrusion protruding laterally outward instead of the recesses 25. This protrusion allows the molded part 9 and the insert panel 12 to be engaged with each other in the weatherstrip longitudinal direction A, and provides the same advantages as those of the recesses 25.

## Claims

1. A weatherstrip (6) comprising:
a molded part (9) which is made of a rubber-like elastic material and in which an insert panel (12) is embedded,
one side edge (15a) of the insert panel (12) defining the corner (15) has at least one recess (25) opening laterally outward or at least one protrusion protruding laterally outward, **characterized in that**
the molded part (9) has an opening (18) formed in a surface of the molded part (9),
a portion of the insert panel (12) with a clip attachment hole (14) near a corner (15) defined by two adjacent side edges (15a, 15b) of the insert panel (12) is exposed through the opening (18), and
the at least one recess (25) or the at least one protrusion getting engaged with the molded part (9) to reduce displacement of the molded part (9) along the side edge (15a).

2. The weatherstrip (6) of claim 1, wherein
the side edge (15a) extends in a longitudinal direction (A) of the weatherstrip (6).

3. The weatherstrip (6) of claim 1 or 2, wherein
while the insert panel (12) has a plurality of through holes (13) through which the rubber-like elastic material enters to bond both side portions of the molded part (9) residing on both sides of the insert panel (12) together, there is no space for providing the through holes (13) between the corner (15) and an exposed portion (19) near the corner (15), and
the through holes (13) are formed in a portion of the insert panel (12) except between the corner (15) and the exposed portion (19).

4. The weatherstrip (6) of any one of claims 1-3, wherein
an exposed portion (19) of the insert panel (12) near the corner (15) protrudes from a peripheral part (21) of the insert panel (12) located around the exposed portion (19) and covered with the molded part (9) toward the surface of the molded part (9), and
a level difference (D) is formed between the exposed portion (19) and the peripheral part (21).

5. The weatherstrip (6) of any one of claims 1-4, wherein
the at least one recess (25) or the at least one protrusion comprises a plurality of recesses (25(1), 25(2)) or protrusions formed along the side edge (15a).

## Patentansprüche

1. Dichtungsleiste (6), umfassend:
ein Formteil (9), das aus einem gummiartigen elastischen Material hergestellt ist und in das eine Einsatzplatte (12) eingebettet ist,
wobei eine Seitenkante (15a) der die Ecke (15) definierenden Einsatzplatte (12) mindestens eine Aussparung (25) aufweist, die sich seitlich nach außen öffnet, oder mindestens ein Vorsprung, der seitlich nach außen vorspringt,
**dadurch gekennzeichnet, dass**
das Formteil (9) eine Öffnung (18) aufweist, die in einer Oberfläche des Formteils (9) ausgebildet ist, wobei ein Abschnitt der Einsatzplatte (12) mit einem Clip-Befestigungsloch (14) nahe einer Ecke (15), die durch zwei benachbarte Seitenkanten (15a, 15b) der Einsatzplatte (12) definiert ist, durch die Öffnung (18) freigelegt ist,
und
wobei die mindestens eine Aussparung (25) oder der mindestens eine Vorsprung, die mit dem Formteil (9) in Eingriff kommen, um die Verschiebung des Formteils (9) entlang der Seitenkante (15a) zu reduzieren.

2. Dichtungsleiste (6) nach Anspruch 1, wobei sich die Seitenkante (15a) in einer Längsrichtung (A) der Dichtungsleiste (6) erstreckt.

3. Dichtungsleiste (6) nach Anspruch 1 oder 2, wobei
während die Einsatzplatte (12) eine Vielzahl von Durchgangslöchern (13) aufweist, durch die das gummiartige elastische Material eintritt, um beide Seitenabschnitte des Formteils (9), die auf beiden Seiten der Einsatzplatte (12) liegen, miteinander zu verbinden, es keinen Raum für das Bereitstellen der Durchgangslöcher (13) zwischen der Ecke (15) und einem freiliegenden Abschnitt (19) in der Nähe der Ecke (15) gibt, und
die Durchgangslöcher (13) in einem Abschnitt der Einsatzplatte (12) außer zwischen der Ecke (15) und dem freiliegenden Abschnitt (19) ausgebildet sind.

4. Dichtungsleiste (6) nach einem der Ansprüche 1 bis 3, wobei
ein freiliegender Abschnitt (19) der Einsatzplatte (12) nahe der Ecke (15) aus einem um den freiliegenden Abschnitt (19) herum angeordneten Umfangsteil (21) der Einsatzplatte (12) vorspringt und mit dem Formteil (9) in Richtung der Oberfläche des Formteils (9) bedeckt ist, und ein Höhenunterschied (D) zwischen dem freiliegenden Abschnitt (19) und dem Umfangsteil (21) gebildet wird.

5. Dichtungsleiste (6) nach einem der Ansprüche 1 bis 4, wobei
die mindestens eine Aussparung (25) oder der mindestens eine Vorsprung eine Vielzahl von Aussparungen (25(1), 25(2)) oder Vorsprünge, die entlang der Seitenkante (15a) ausgebildet sind, umfasst.

## Revendications

1. Joint d'étanchéité (6) comprenant :
une partie moulée (9) qui est fabriquée en un matériau élastique caoutchouteux et dans laquelle un panneau d'insert (12) est intégré,
une arête latérale (15a) du panneau d'insert (12) définissant le coin (15) présente au moins un évidement (25) ouvrant latéralement vers l'extérieur ou au moins une saillie en saillie latéralement vers l'extérieur,
**caractérisé en ce que**
la partie moulée (9) présente une ouverture (18) formée dans une surface de la partie moulée (9),
une portion du panneau d'insert (12) avec un trou d'attache de clip (14) près d'un coin (15) défini par deux arêtes latérales adjacentes (15a, 15b) du panneau d'insert (12) est exposée au travers de l'ouverture (18), et
l'au moins un évidement (25) ou l'au moins une saillie venant en prise avec la partie moulée (9) pour réduire le déplacement de la partie moulée (9) le long de l'arête latérale (15a).

2. Joint d'étanchéité (6) selon la revendication 1, dans lequel
l'arête latérale (15a) s'étend dans une direction longitudinale (A) du joint d'étanchéité (6).

3. Joint d'étanchéité (6) selon la revendication 1 ou 2, dans lequel
alors que le panneau d'insert (12) présente une pluralité de trous débouchants (13) au travers desquels le matériau élastique caoutchouteux entre pour lier les deux portions latérales de la partie moulée (9) résidant sur les deux côtés du panneau d'insert (12) ensemble, il n'existe pas d'espace pour la fourniture des trous débouchants (13) entre le coin (15) et une portion exposée (19) près du coin (15), et
les trous débouchants (13) sont formés dans une portion du panneau d'insert (12) sauf entre le coin (15) et la portion exposée (19).

4. Joint d'étanchéité (6) selon l'une quelconque des revendications 1 à 3, dans lequel
une portion exposée (19) du panneau d'insert (12) près du coin (15) fait saillie d'une partie périphérique (21) du panneau d'insert (12) située autour de la portion exposée (19) et recouverte avec la partie moulée (9) vers la surface de la partie moulée (9), et
une différence de niveau (D) est formée entre la portion exposée (19) et la partie périphérique (21).

5. Joint d'étanchéité (6) selon l'une quelconque des revendications 1 à 4, dans lequel
l'au moins un évidement (25) ou l'au moins une saillie comprend une pluralité d'évidements (25(1), 25(2)) ou de saillies formées le long de l'arête latérale (15a).
